# EUROPEAN PATENT SPECIFICATION

(11) **EP 2 919 627 B1**
(45) Date of publication and mention of the grant of the patent: **19.06.2019**
(21) Application number: 13820905.1
(22) Date of filing: 25.10.2013
(51) Int. Cl.: A47J 19/02, A23N 1/02

(54) **JUICE EXTRACTOR**
SAFTEXTRAKTOR
EXTRACTEUR DE JUS

(30) Priority: 13.11.2012 EP 12192352
(43) Date of publication of application: 23.09.2015
(73) Proprietor: Koninklijke Philips N.V., 5656 AE Eindhoven (NL)
(72) Inventor: RAMUSCH, Adolf, 5656AE Eindhoven (NL); SCHLUG, Thomas, 5656AE Eindhoven (NL)
(74) Representative: Coops, Peter
(86) International application number: PCT/IB2013/059655
(87) International publication number: WO 2014/076598

(56) References cited:
- DE-B- 1 239 447
- US-A- 2 280 214
- US-A- 2 302 138
- US-A- 2 995 165

## Description

### FIELD OF THE INVENTION

The present invention relates to a juice extractor.

### BACKGROUND OF THE INVENTION

Juice extractors are used for providing juice, for example from vegetables or fruits. The fruits or vegetables are supplied to a shredding or grating device, for example a grating disc. The grating releases juice from the food as well as pulp from the food. By exerting centrifugal forces to the juice and pulp due to the rotation of the shredding or grating disc, the juice and pulp are provided to a sieve surrounding the disc. The sieve is rotating as well, such that the juice is filtered from the pulp. The juice is then collected and supplied to a respective container. Further, the pulp is collected in a separate container. For example, EP 2 368 465 A1 describes a centrifuge type juice extractor having a frustroconical sieve. For example, the juice is provided to a tap in order to discharge the juice into, for example, a glass or mug. The pulp is provided to a container below the sieve. US 2 280 214 A describes another centrifugal type juice extractor having a grating disk and a circumferential pulp receiving bowl below a sieve and a pulp deflector being arranged rotatably. Further, around the pulp receiving bowl and the sieve, a juice bowl for collecting the extracted juice is provided that is arranged with a spout-like outlet. The pulp receiving bowl, as well as the juice bowl, the sieve and the pulp deflector, are provided inside a casing that is closed with a cover. Further, the pulp receiving bowl is supported by hangers provided around the circumference of the casing as supporting arms. The juice bowl is also resting on these hangers and is provided with an overlap of a lip-like edge overlapping a lip-like edge of the pulp receiving bowl. However, in case of an integrated pulp collector or pulp container, the respective receptacle has to be emptied manually in order to ensure a proper function. It has been shown that this means additional steps when operating the juice extractor.

### SUMMARY OF THE INVENTION

There may thus be a need to provide a juice extractor with an improved pulp handling.

The object of the present invention is solved by the subject-matter of the independent claim, wherein further embodiments are incorporated in the dependent claims.

According to a first aspect of the present invention, a juice extractor is provided, comprising a grating disc to grate food into juice and pulp, a feeding tube to feed food to the grating disc, a rotating sieve to separate juice and pulp, a juice collector, a pulp container enclosing a pulp collection volume, an upper housing cover, and a base housing. The sieve is of a frustroconical form extending in diameter along the feeding direction from a top end to a bottom end, such that the top end has a smaller diameter than the bottom end. During use, the juice is transported to the outside of the sieve, and the pulp is discharged to the pulp container arranged below the sieve. The juice collector is provided with a circumferential receptacle connected to a discharge port, wherein the circumferential receptacle is provided such that juice transported to the outside of the sieve is collected. The pulp container comprises an outer wall, which outer wall is provided as a single-shell housing portion supporting the juice collector. The outer wall encloses the pulp collection volume in a radial direction, and the outer wall is circumferentially transparent at least such that a pulp container filling state is visually inspectable for an operator from outside in all viewing directions.

The pulp container may be provided to be removable, for example for cleaning and emptying purposes.

The term "from outside in all viewing directions" relates to the normal use of the juice extractor, for example arranged on a table, and the user manually activating the juice extractor mechanism. For example, the viewing directions relate to a view towards the juice extractor from all horizontal directions, as well as from elevated side positions, i.e. looking slightly inclined downwards onto the juice extractor. The viewing directions may also comprise a view from the top.

For example, the pulp container filling state is visually inspectable for an operator from outside in all horizontal viewing directions relating to a normal operating state of the juice extractor.

The term "filling state" relates to an empty state as well as to a completely filled state of the pulp container, which completely filled state then requires manually emptying the pulp container.

The term "transparent" relates to a transparent material, allowing visual inspection of the pulp filling height in the pulp container. The "transparent material" may have a light distributing effect, e.g. providing a translucent effect where a direct line of site is not possible, but a visual impression of the pulp filling height is nevertheless provided to the user.

The term "encloses the volume" means that the wall, i.e. the outer wall, is in direct contact with the pulp collection volume, and in case of pulp inside the volume, the outer wall is in direct contact with the pulp.

The upper housing cover is also referred to as lid.

The grating disc may be provided below the top end of the sieve, such that the produced pulp and juice is hitting the sieve at the respective upper end for an efficient use of the sieve.

By providing an outer wall allowing a visual inspection, the user can easily monitor the filling state during the operation of the juice extractor. Thus, it is possible to prepare a number of juice portions, each time generating or producing further pulp, until the filling state is efficiently raised to the maximum. Without the possibility to easily inspect the filling state, the user would have to either manually empty the pulp container each time a juice volume is produced, or to open the juice extractor in order to inspect the filling state of pulp container. By providing the outer wall as transparent in a way that the user can have a look at the filling state from all possible points the user can be positioned while operating the juice extractor, the integrated pulp container can be used with maximum efficiency.

According to an example, the outer wall is circumferentially transparent at least along approximately 25 % of the periphery. For example, an alternating pattern of transparent and opaque portions is provided. In one example, the outer wall is circumferentially transparent at least along approximately 50 % of the periphery, e.g. approximately 75 %.

According to an example, the outer wall is circumferentially transparent along the complete periphery. This allows a continuous monitoring of the filling state. For example, differences in the filling state along the circumferential extension of the pulp container can be detected by the user.

According to an example, the upper housing cover is supported by the juice collector and the outer wall is resting on the base housing and supporting the juice collector. The outer wall is provided as a transparent housing ring segment arranged between the base housing and the juice collector with the upper housing on top. This provides a construction with a reduced number of parts and thus facilitates manufacturing and assembly steps.

The upper housing cover may be transparent at least such that a juice collector filling state is also visually inspectable from outside in all viewing directions. For example, the upper housing cover is transparent at least along 50 % of its surface. In a further example, the upper housing cover is completely transparent.

According to a further example, the outer wall is made from a transparent material. For example, a plurality of segments is provided as transparent inspection portions, whereas other portions are provided with a pattern or other type of coating, for example only allowing a translucent inspection, or even covering certain segments. However, the arrangement of transparent portions and non-transparent portions are arranged such that the complete pulp container can visually be inspected with respect to the filling state.

According to a further example, the complete pulp container is made from a transparent material. This provides the advantage that the pulp container can be manufactured in a single step, for example a molding process.

According to an example, the pulp collection volume has a filling height, and the outer wall is extending across at least half of the filling height. For example, the outer wall is extending across at least two thirds of the filling height. In a further example, the outer wall is extending across the complete filling height.

The single shell housing is an intermediate housing provided as housing wall between the base housing forming a lower housing portion and the upper housing parts in an example. The juice collector, e.g. juice collector ring, may provide a further intermediate housing followed by the upper cover forming the upper housing portion.

According to an example, the base housing provides a centring edge against which the pulp container rests in a radial direction. The centring edge may be provided to rest against a lower inner edge of the pulp container, or an outer lower edge. For example, the centring edge provides radial centring. For rotational centring, a protrusion or recess may be provided at the pulp container, and a recess or protrusion may be provided on the base housing.

According to an example, the centring edge is a rim of the base housing, and the pulp container is provided with a recess providing a recess side wall portion and a recess upper wall portion, wherein the recess side wall portion at least partly abuts the rim in a radial direction and the recess upper wall portion rests on the rim.

According to another example, the centring edge is provided at the inner radius of the pulp container.

According to an example, the pulp container surrounds a drive unit for rotating the grating disc and for rotating the sieve.

According to an example, the pulp container has a circumferential lower portion with an elevated part providing an interruption of the circumferential lower portion. The elevated part extends across the radial extension of the circumferential lower portion.

For example, the elevated part provides constructional space for the base unit, for example for the location of a safety mechanism for operating the juice extractor only with mounted pulp container, mounted juice collector, and closed upper housing cover. The space around the drive unit that is not necessary for integrating the safety mechanism, can thus be used for the pulp container or pulp receiving volume.

According to an example, the base housing comprises an inner housing and an outer housing, the inner housing enclosing a drive unit for rotating the grating disc and for rotating the sieve from above, and the outer housing enclosing the drive unit from below and acting as support stand of the juice extractor.

For example, the outer housing is enclosing the drive unit from the side. In a further example, the inner housing is provided enclosing the drive unit from the side, and the outer housing is a lower housing connected to the inner housing at the bottom portion. According to an example, the inner housing and outer housing overlap forming the centring edge.

According to an example, the juice collector is provided with a first sealing contacting an upper edge of the pulp container and a second sealing contacting a lower edge of the upper housing cover, and the first and second sealings are provided as injected rubber sealings. This provides a facilitated handling and ensures a proper sealing when operating the device, since the sealings are integrated and can thus not be forgotten.

According to an aspect, a juice extractor with an upside-down sieve technology is provided, where the pulp is collected in one place, i.e. the pulp container, which is integrated in the power unit. In order to avoid a bulky device, the pulp container is provided in a circumferential manner to be in concordance with the ring-shaped rotating sieve. Further, in order to most efficiently use the available space and therefore reduce the volume as much as possible, the pulp container is a structural part of the juice extractor and the inside is provided to be mostly visible from the outside. Thus, the user can monitor or control the pulp level inside the volume for a maximum use of the storage space of the pulp container for storing, at least temporarily, the pulp. By providing a transparent outer wall of the pulp container, the user has a direct view for assessing the situation of the filling state of the pulp container. The pulp container is therefore provided with two functions, namely the receiving or storage function for temporarily containing the pulp, and the supporting function by acting as a constructive, i.e. load-bearing part. Even though the tolerance chain is increased, i.e. longer, and therefore enhanced requirements with respect to manufacturing tolerances are at hand, the provision of the double-functioning removable pulp container means economic benefits during the manufacturing process, and the capability for a visual inspection for the user from mostly all viewing directions adds to user's comfort and is thus providing an increased functionality.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 shows a perspective view of an example of a juice extractor;
Fig. 2 shows a vertical section through the centre portion of the juice extractor of Fig. 1;
Fig. 3 shows a detailed section of the illustration of Fig. 2;
Fig. 4 shows a further example in a detailed cross-section, showing an inner centring edge;
Fig. 5 shows a perspective view of a base part of the juice extractor of Fig. 1;
Fig. 6 shows a perspective view of an example of a pulp container;
Fig. 7 shows the pulp container of Fig. 6 in a perspective view from below;
Fig. 8 shows a perspective view of a juice collector in an example;
Fig. 9 shows a detail of the juice collector of Fig. 8; and
Fig. 10 shows a photographic illustration of the juice extractor of Fig. 1.

### DETAILED DESCRIPTION OF EMBODIMENTS

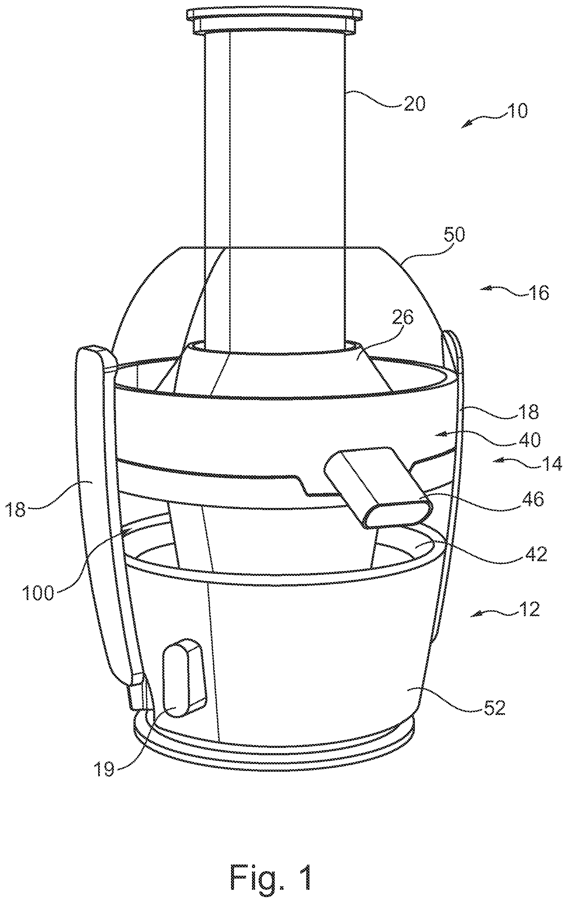

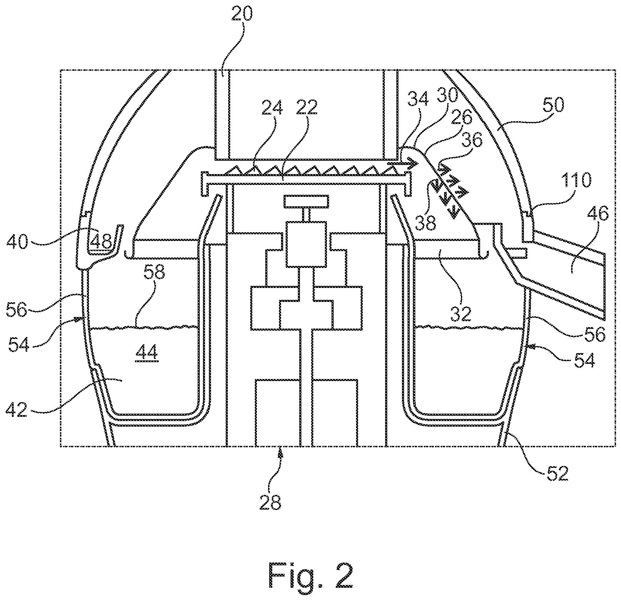

Fig. 1 shows a juice extractor 10, comprising a base portion 12, an intermediate portion 14, and an upper portion 16. The base portion 12 acts as stand or support for the juice extractor 10. The intermediate portion 14 comprises functional elements that will be described in relation with Fig. 2 in more detail. The upper portion 16 comprises a further functional element and a lid or cover, which will also be described in more detail, with reference to Fig. 2. For different purposes, i.e. cleaning purposes and discharging or emptying purposes, the upper portion can be removed from the intermediate portion, and the intermediate portion can also be removed from the base portion 12.

Further, two upwardly oriented support bars 18 are provided for an increased mounting stability of the upper portion 16, resting on the intermediate portion 14, and the latter resting on the base portion 12. The support bars 18 are provided as clamps for locking the upper housing cover to the device. Still further, an operating knob 19 is schematically shown. The control knob 19 may also be provided as touch-sensitive integrated area of the base housing 52. The interface for operating the juice extractor 10 may also be provided at other portions, for example on the support bars 18.

Fig. 2 shows a cross-section for illustrating the different components for juice extraction. A feeding tube 20 is provided to feed food to a grating disc 22. For example, the feeding tube 20 has an upper opening (not shown in Fig. 2), for inserting food that is to be grated. The grating disc is arranged at the lower end or bottom end of the feeding tube, in order to grate the food into juice and pulp. This is provided by rotating the grating disc 22, which is provided with a plurality of protrusions 24 for grating the food. Upon fast rotation, the pulp and juice is leaving the grating disc 22 in a radial, i.e. horizontal direction, hitting a rotating sieve 26, which is provided to separate juice and pulp. The rotating sieve 26 and the grating disc 22 are rotated by a motor drive unit 28, not further described in detail. The grating disc and the rotating sieve may rotate in the same or similar direction, although not being necessarily the case, and with a similar or same speed, also not being necessarily the case, such that the juice is filtered from the pulp. The grating disc 22 and the rotating sieve 26 may also have contrary rotating directions. The rotating sieve 26 is of a frustroconical form, extending in diameter along the feeding direction from a top end 30 to a bottom end 32, such that the top end 30 has a smaller diameter than the bottom end 32. The feeding direction is arranged, for example, in a vertical manner, in a downwards direction. For example, the grating disc 22 is provided below the top end 30 of the sieve 26. Thus, juice and pulp are supplied to the rotating sieve 26 at the upper portion of the latter, as indicated with arrow 34. During use, the juice is transported to the outside of the sieve 26, and the pulp is discharged to an area below the sieve 26. A number of horizontal arrows 36 indicate a flow path of the juice, whereas a number of vertical arrows 38 indicate a path of the pulp.

Further, a juice collector 40 is provided, as well as a pulp container 42, enclosing a pulp collection volume 44. The pulp container 42 surrounds the drive unit 28 for rotating the grating disc 22 and for rotating the sieve 26. As an example, the juice collector 40 is provided with a tap 46 for discharging the juice to, for example, a glass or mug (not shown). The tap 46 is connected to a circumferential receptacle 48 of the juice collector 40. The circumferential receptacle 48 is provided such that juice transported to the outside of the sieve 26 is collected. The circumferential receptacle 48 is connected to a discharge port, for example in form of the above-mentioned tap 46. The pulp container 42 maybe fixed (not further shown) or may be removable, as shown in the figures.

Further, an upper housing 50 is provided, as well as a lower or base housing 52.

The upper housing 50 may be supported by the juice collector 40. The juice collector 40 may be supported by the pulp container 42.

The pulp container 42 comprises an outer wall 54, which outer wall is provided as a single shell housing portion 56, supporting the juice collector 40. The outer wall 54 encloses the pulp collection volume 44 in a radial direction from the outside in a circumferential manner.

In the example shown, the outer wall 54 is circumferentially transparent at least such that the pulp container filling state, indicated with a wave-like line 58, is visually inspectable for an operator from outside in all viewing directions, for example, in all horizontal viewing directions relating to a normal operating state of the juice extractor.

The single-shell housing portion 56 may be resting on the base housing 52.

In a further example, not shown, the juice collector 40 is formed integrally with the pulp container 42. The pulp container 42 is supporting the upper housing cover 50. For example, the juice collector 40 may be provided nestled in the pulp container 42.

In a further example, not shown, the juice collector 40 is resting on the inner housing, e.g. the base housing 52, and the pulp container 42 surrounds the base housing 52. In one example, the base housing 52 is at least partly surrounded by the pulp container 42. For example, the base housing 52 rests on the pulp container 42, which may also act as a support stand. The juice collector 40 is provided as separate part, for example resting on the pulp container 42, or as integrated part with the pulp container 42, or may be resting on the base housing 52.

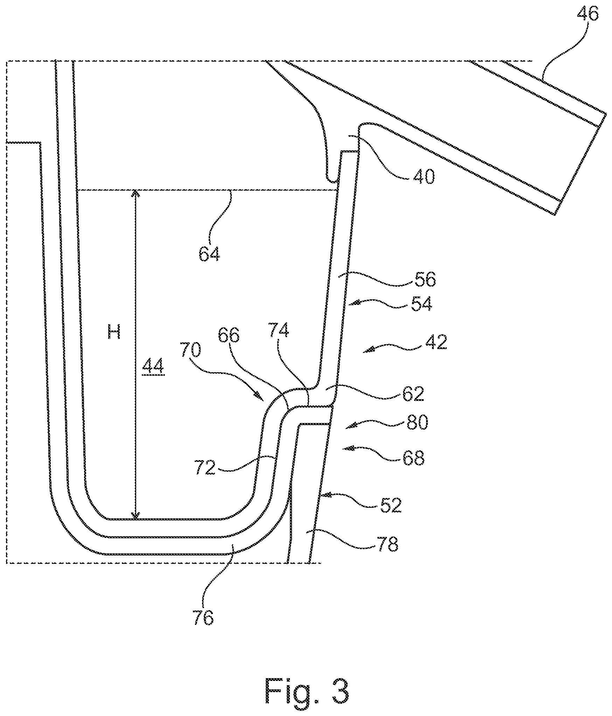

Fig. 3 shows a detailed enlarged cross-section of the pulp container 42, having the single shell housing portion 56 in form of the outer wall 54. In one example, the outer wall is circumferentially transparent at least along approximately 25 % of the periphery, e.g. approximately 50 % or approximately 75 %. In the example of Fig. 3, as well as Figs. 1 and 2, the outer wall 54 is circumferentially transparent along the complete periphery. It must be noted that, although this feature is shown in Fig. 2, and also in Fig. 1 and Fig. 3, the grade or amount of transparency can vary, as long as the pulp container filling state 58 is visual from mostly all viewing directions.

As indicated in Fig. 1, in one example, the outer wall 54 is provided as a transparent housing ring segment 60, arranged between the base housing 52 and the juice collector 40 with the upper housing 50 on top. For example, the outer wall 54 is made from a transparent material 62. As indicated in Fig. 3, the complete pulp container 42 can be made from the transparent material 62.

A hashed line 64 indicates a filling height of the pulp collection volume 44. The outer wall 54 is extending across at least half of the filling height 64. The filling height 64 is also indicated with a double arrow H.

In one example, as indicated in Fig. 3, the base housing 52 provides a centring edge 66 against which the pulp container 42 rests in a radial direction. The centring edge 66 provides radial centring. For rotational centring, a protrusion or recess may be provided at the pulp container, and a recess or protrusion on the base housing. The centring edge 66 may be provided as a rim 68 of the base housing 52, and the pulp container 42 is provided with a recess 70 providing a recess side wall portion 72, and a recess upper wall portion 74. The recess side wall portion 72 at least partly abuts the rim 68 in a radial direction, and the recess upper wall portion rests on the rim 68.

For example, the base housing 52 comprises an inner housing 76 and an outer housing 78. The inner housing encloses the drive unit 28 for rotating the grating disc 22 and for rotating the sieve 26, wherein the enclosing takes place from above. The outer housing 78 encloses the drive unit 28 from below and acts as a support stand of the juice extractor 10. The outer housing may enclose the drive unit 28 from the side, as indicated in Fig. 3. As shown in Fig. 3, the inner housing 76 and the outer housing 78 overlap, providing an overlapping portion 80, forming the centring edge 66.

The term "inner" relates to a housing function provided in the mounted state of the juice extractor, with mounted pulp container, juice collector and upper housing. The "inner" housing provided enclosure against the further, i.e. mounted parts. The term "outer" relates to a housing function provided between the components and the exterior or surrounding.

In a further example, the inner housing 76 is provided enclosing the drive unit 28 also from the side, and the outer housing 78 is a lower housing connected to the inner housing 76 at the bottom portion (not further shown).

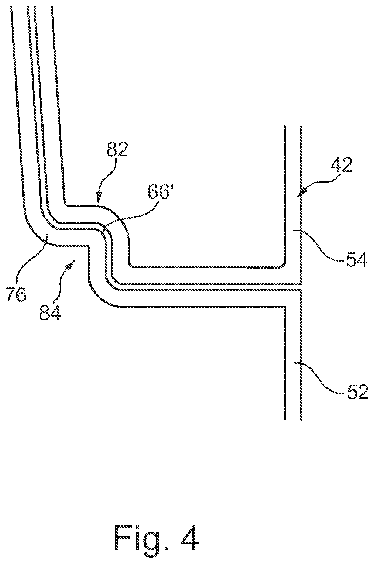

Fig. 4 shows a further example, where the pulp container 42 is provided with an inner recess 82, and the inner housing 76 is provided with a centring edge 66' at an inner radius 84 of the pulp container 42. As shown in Fig. 4, the transparent outer wall 54 is provided over the complete height of the pulp container 42. Since the centring function is provided, for example, by the protrusion of the inner housing abutting the inner walls of the recess 82 of the pulp container 42, a transition from the transparent pulp container 42 to the, for example, opaque base housing 54 can be provided, where the two components meet each other.

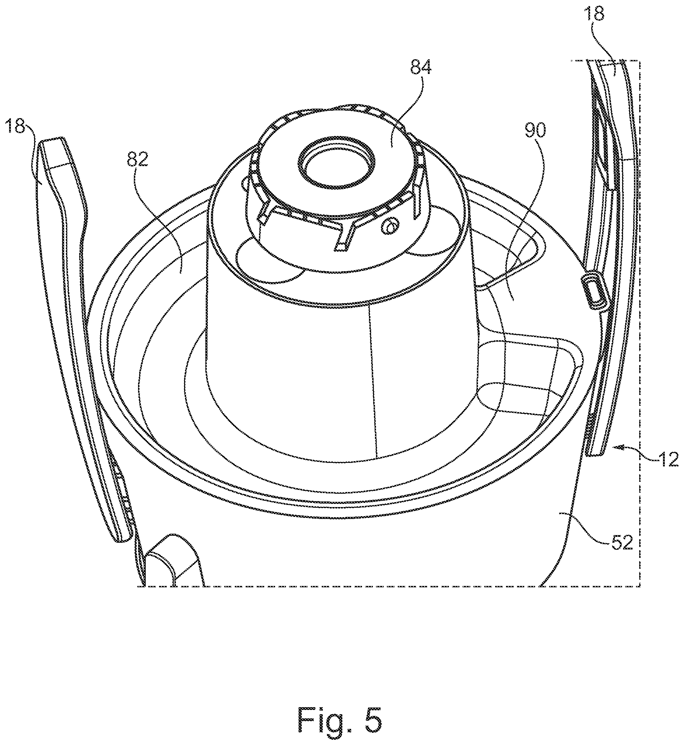

Fig. 5 shows a perspective view of the base portion 12, where the intermediate or middle portion 14, as well as the upper portion 16 is temporarily removed or demounted. The base portion 12 is shown with the base housing 52, providing a circumferential recess 82 for receiving the lower portion of the pulp container 42. Further, an upper portion 84 of the drive unit 28 is shown for receiving the grating disc (not further shown) in Fig. 5.

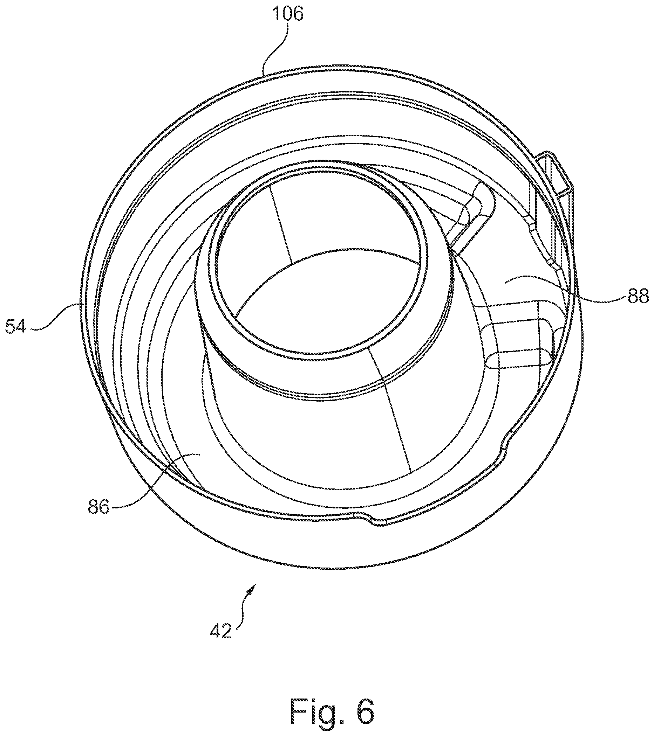

Fig. 6 shows the pulp container 52 that is to be placed on the base portion 12 of Fig. 5. The pulp container 42 has a circumferential lower portion 86 with an elevated part 88, providing an interruption of the circumferential lower portion 86. The elevated part 88 extends across the radial extension of the circumferential lower portion. Thus, the lower portion 86 is interrupted at the elevated part 88.

With reference back to Fig. 5, the elevated part 88 is provided, since the base portion 52 is provided with an elevated portion 90, for example for locating and integrating a safety mechanism, avoiding an operation of the grating disc 22, without the pulp container 52 mounted to the base housing 52, and the juice collector 40 mounted to the pulp container 42, and the upper housing cover 50 mounted on the juice collector 40.

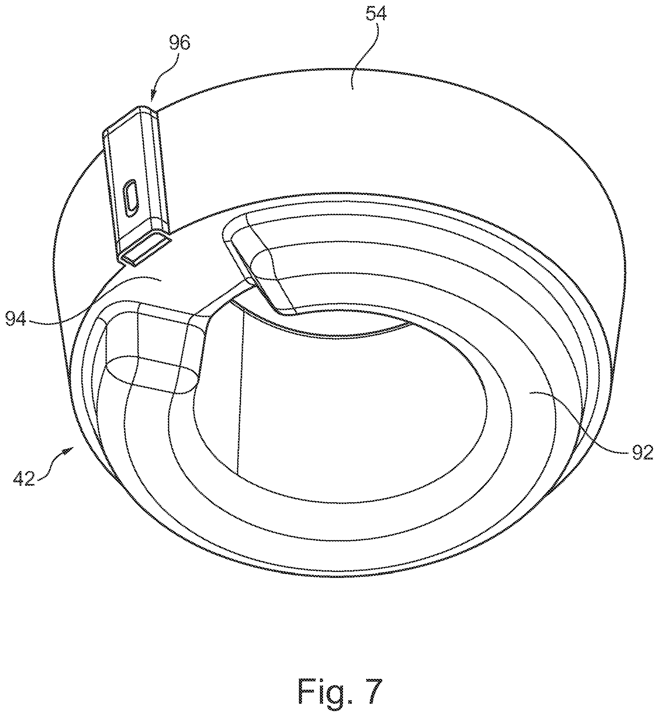

Fig. 7 shows the pulp container 42 of Fig. 6 in a perspective view from below. As can be seen, the circumferential lower portion 86 is provided by a lower extension 92, having a gap 94 at the location of the elevated part 88. Further, a first gear mechanism 96 is indicated as a component of the above-mentioned safety mechanism.

It must be noted that the Figs. 6 and 7 show the pulp container 42 in an opaque manner for illustrational purposes, whereas the present invention provided a visual inspectability from the outside by providing the outer wall 54 mostly transparent along the circumferential extension.

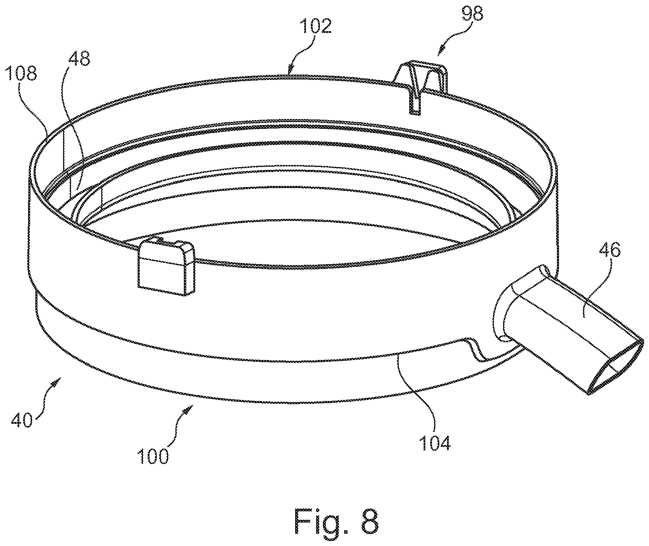

Fig. 8 shows a perspective view of the juice collector 40 with the tap or discharge port 46. Further, a second gearing mechanism 98 is indicated for the above-mentioned safety mechanism. The juice collector 40 has a lower edge 100 for a connection with the pulp container 42, and an upper edge 102 for connection with the upper housing cover 50. As indicated in Fig. 8, according to one example, the juice collector 40 is provided with a first sealing 104 for contacting an upper edge 106 (see also Fig. 6) of the pulp container 42, and a second sealing 108 for contacting a lower edge 110 (see also Fig. 2) of the upper housing cover 50.

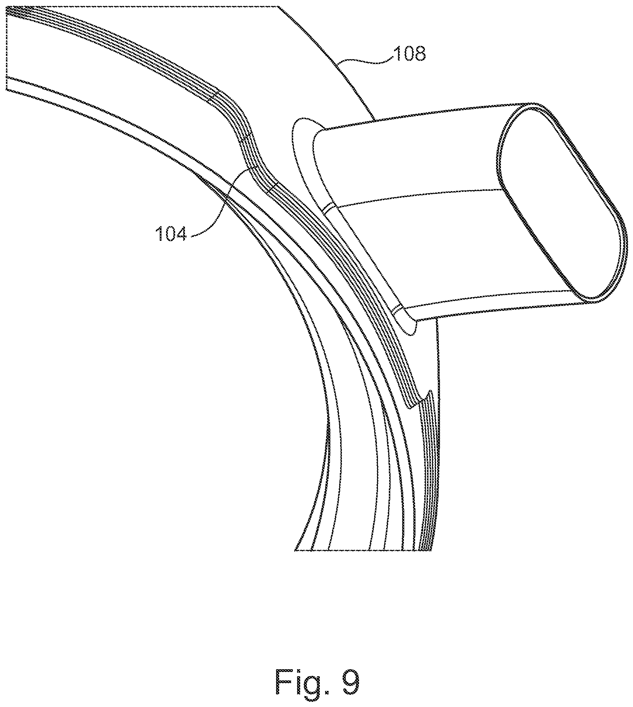

As can be seen further in Fig. 9, showing a detailed section of Fig. 8 in a perspective view from below, the first and second sealings 104, 108 are provided as injected rubber sealings.

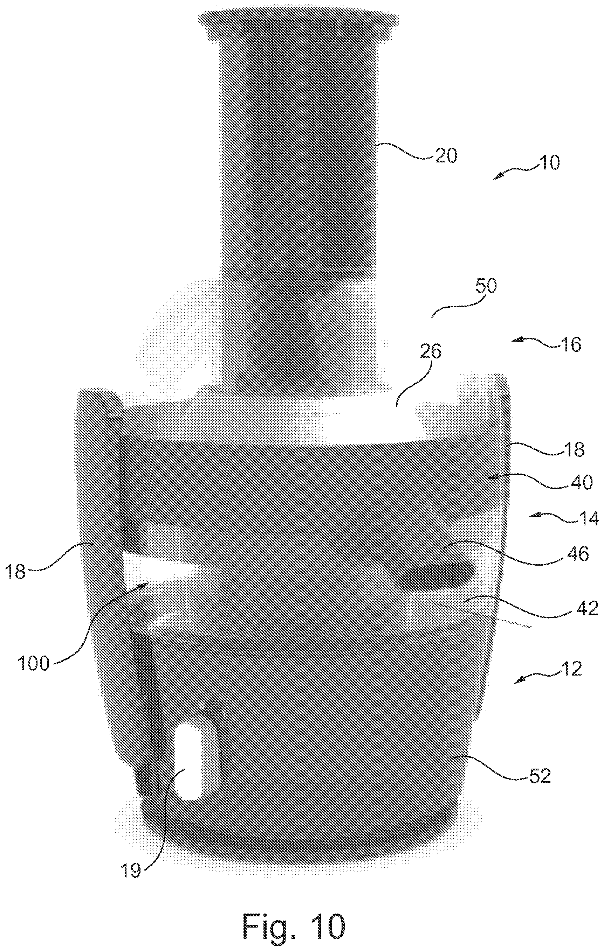

Fig. 10 shows the juice extractor 10 of Fig. 1 in a photographic illustration. Same reference numbers as in Fig. 1 are used for Fig. 10.

It must be noted further that the juice extractor 10 may be provided with a circular cross-section, i.e. an essentially cylindrical shape, as shown in the examples. However, in a further example, also different outer shapes, for example square-shaped housings, or square-shaped with rounded edges, are provided. However, it is noted that due to the rotational components, such as the rotating sieve 26 and the rotating grating disc 22, circular forms will at least be present in the centre, i.e. for the functional parts. It must be noted further that the upper housing 50, i.e. the lid, may be transparent or may also be opaque. A transparent lid allows the visual inspection also of the juice collector 40. In addition to the visual inspection of the pulp collector, or pulp container 42, the lid may be spherically shaped, or may be box-shaped or having a form of a truncated cone.

In a further example, also the juice collector 40 is provided in transparent or translucent material. Still further, an example is provided where the feed tube 20 is also provided in transparent or translucent material. In a further example, the base housing 52 is provided in a translucent material.

It has to be noted that embodiments of the invention are described with reference to different drawings. Although some examples are shown together in one figure, this does not mean that they necessary have to be combined in one embodiment. The respective features are also provided separately. A person skilled in the art will gather from the above and the claims that, unless otherwise notified, in addition to any combination of features belonging to one embodiment also any combination between features relating to different claims and examples are considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention within the scope of the appended claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A juice extractor (10), comprising:
- a grating disc (22) to grate food into juice and pulp;
- a feeding tube (20) to feed food to the grating disc;
- a rotating sieve (26) to separate juice and pulp;
- a juice collector (40);
- a pulp container (42) enclosing a pulp collection volume (44);
- an upper housing cover (50); and
- a base housing (52);
the sieve is of a frustroconical form extending in diameter along the feeding direction from a top end (30) to a bottom end (32), such that the top end has a smaller diameter than the bottom end;
during use, the juice is transported to the outside of the sieve, and the pulp is discharged to the pulp container arranged below the sieve;
the juice collector is provided with a circumferential receptacle (48) connected to a discharge port (46), wherein the circumferential receptacle is provided such that juice transported to the outside of the sieve is collected;
wherein, the pulp container comprises an outer wall (54), which outer wall is provided as a single-shell housing portion (56) supporting the juice collector;
the outer wall encloses the pulp collection volume in a radial direction; **characterized in that** the outer wall is circumferentially transparent at least such that a pulp container filling state (58) is visually inspectable for an operator from outside in all viewing directions.

2. Juice extractor according to claim 1, wherein the outer wall is circumferentially transparent at least along approximately 25 % of the periphery.

3. Juice extractor according to claim 1 or 2, wherein the outer wall is circumferentially transparent along the complete periphery.

4. Juice extractor according to one of the preceding claims, wherein the upper housing cover is supported by the juice collector;
wherein the outer wall is resting on the base housing and supporting the juice collector; and
wherein the outer wall is provided as a transparent housing ring segment (60) arranged between the base housing and the juice collector with the upper housing on top.

5. Juice extractor according to one of the preceding claims, wherein the outer wall is made from a transparent material (62).

6. Juice extractor according to one of the preceding claims, wherein the complete pulp container is made from a transparent material.

7. Juice extractor according to one of the preceding claims, wherein the pulp collection volume has a filling height (64); and wherein the outer wall is extending across at least half of the filling height.

8. Juice extractor according to one of the preceding claims, wherein the base housing provides a centring edge (66) against which the pulp container rests in a radial direction; and wherein:
i) the centring edge is a rim (68) of the base housing and the pulp container is provided with a recess (70) providing a recess side wall portion (72) and a recess upper wall portion (74); wherein the recess side wall portion at least partly abuts the rim in a radial direction and the recess upper wall portion rests on the rim; and/or
ii) the centring edge is provided at an inner radius (84) of the pulp container.

9. Juice extractor according to one of the preceding claims, wherein the pulp container surrounds a drive unit (28) for rotating the grating disc and for rotating the sieve.

10. Juice extractor according to one of the preceding claims, wherein the pulp container has a circumferential lower portion (86) with an elevated part (88) providing an interruption of the circumferential lower portion;
wherein the elevated part extends across the radial extension of the circumferential lower portion.

11. Juice extractor according to claim 10, wherein the base housing comprises an inner housing (76) and an outer housing (78), the inner housing enclosing a drive unit (28) for rotating the grating disc and for rotating the sieve from above, and the outer housing enclosing the drive unit from below and acting as support stand of the juice extractor.

12. Juice extractor according to claim 11, wherein the inner housing and outer housing overlap (80) forming the centring edge.

13. Juice extractor according to one of the preceding claims, wherein the juice collector is provided with a first sealing (104) contacting an upper edge (106) of the pulp container and a second sealing (108) contacting a lower edge (110) of the upper housing cover; and
wherein the first and second sealings are provided as injected rubber sealings.

## Patentansprüche

1. Entsafter (10), umfassend:
- eine Gitterscheibe (22) zum Zerreiben von Nahrungsmitteln in Saft und Pulpe;
- ein Beschickungsrohr (20) zum Beschicken von Nahrungsmitteln zur Gitterscheibe;
- ein drehendes Sieb (26) zum Trennen von Saft und Pulpe;
- einen Saftsammler (40);
- einen Pulpe-Behälter (42), der ein Pulpe-Sammelvolumen (44) einschließt;
- eine obere Gehäuseabdeckung (50); und
- ein Grundgehäuse (52);
das Sieb ist aus einer kegelstumpfförmigen Form, die sich im Durchmesser entlang der Beschickungsrichtung von einem Kopfende (30) zu einem Fußende (32) erstreckt, sodass das Kopfende einen kleineren Durchmesser aufweist, als das Fußende;
während des Gebrauchs wird der Saft zur Außenseite des Siebes transportiert und die Pulpe wird in den Pulpe-Behälter, der unter dem Sieb angeordnet ist, ausgebracht;
der Saftsammler ist mit einem umfänglichen Behältnis (48) bereitgestellt, das mit einer Ausbringungsöffnung (46) verbunden ist, wobei das umfängliche Behältnis derart bereitgestellt ist, dass der zur Außenseite des Siebes transportierte Saft gesammelt wird;
wobei der Pulpe-Behälter eine Außenwand (54) umfasst, die Außenwand als ein einschaliger Gehäuseabschnitt (56) bereitgestellt wird, der den Saftsammler trägt;
die Außenwand schließt ein Pulpe-Sammelvolumen in einer radialen Richtung ein;
**dadurch gekennzeichnet, dass**
die Außenwand umfänglich mindestens so transparent ist, dass ein Füllzustand (58) des Pulpe-Behälters für einen Bediener von außen in allen Blickrichtungen visuell einsehbar ist.

2. Entsafter nach Anspruch 1, wobei die Außenwand umfänglich mindestens entlang annähernd 25% der Peripherie transparent ist.

3. Entsafter nach Anspruch 1 oder 2, wobei die Außenwand umfänglich entlang der gesamten Peripherie transparent ist.

4. Entsafter nach einem der vorstehenden Ansprüche, wobei die obere Gehäuseabdeckung durch den Saftsammler getragen wird;
wobei die Außenwand an dem Grundgehäuse anliegt und den Saftsammler trägt; und
wobei die Außenwand als transparentes Gehäuseringsegment (60) bereitgestellt wird, das zwischen dem Grundgehäuse und dem Saftsammler mit dem oberen Gehäuse am Kopf angeordnet ist.

5. Entsafter nach einem der vorstehenden Ansprüche, wobei die Außenwand aus einem transparenten Material (62) gefertigt ist.

6. Entsafter nach einem der vorstehenden Ansprüche, wobei der vollständige Pulpe-Behälter aus einem transparenten Material gefertigt ist.

7. Entsafter nach einem der vorstehenden Ansprüche, wobei das Pulpe-Sammelvolumen eine Füllhöhe (64) aufweist; und wobei sich die Außenwand quer durch mindestens die Hälfte der Füllhöhe erstreckt.

8. Entsafter nach einem der vorstehenden Ansprüche, wobei das Grundgehäuse einen Zentrierrand (66) bereitstellt, an dem der Pulpe-Behälter in einer radialen Richtung anliegt; und wobei:
i) der Zentrierrand eine Fassung (68) des Grundgehäuses ist und der Pulpe-Behälter mit einer Aussparung (70) bereitgestellt ist, die einen aussparungsseitigen Wandabschnitt (72) und einen oberen Aussparungswandabschnitt (74) bereitstellt; wobei der aussparungsseitige Wandabschnitt mindestens teilweise in einer radialen Richtung an der Fassung anstößt und der obere Aussparungswandabschnitt an der Fassung anliegt; und/ oder
ii) der Zentrierrand an einem Innenradius (84) des Pulpe-Behälters bereitgestellt ist.

9. Entsafter nach einem der vorstehenden Ansprüche, wobei der Pulpe-Behälter eine Antriebseinheit (28) zum Drehen der Gitterscheibe und zum Drehen des Siebes umgibt.

10. Entsafter nach einem der vorstehenden Ansprüche, wobei der Pulpe-Behälter einen umfänglichen unteren Abschnitt (86) mit einem erhöhten Teil (88) aufweist, der eine Unterbrechung des umfänglichen unteren Abschnitts bereitstellt;
wobei sich der erhöhte Teil quer durch die radiale Erstreckung des umfänglichen unteren Abschnitts erstreckt.

11. Entsafter nach Anspruch 10, wobei das Grundgehäuse ein Innengehäuse (76) und ein Außengehäuse (78) umfasst, wobei das Innengehäuse eine Antriebseinheit (28) zum Drehen der Gitterscheibe und zum Drehen des Siebes von oben einschließt, und das Außengehäuse die Antriebseinheit von unten einschließt und als Halterung für den Entsafter agiert.

12. Entsafter nach Anspruch 11, wobei das Innengehäuse und Außengehäuse einander überschneiden (80) wodurch der Zentrierrand gebildet wird.

13. Entsafter nach einem der vorstehenden Ansprüche, wobei der Saftsammler mit einer ersten Dichtung (104) bereitgestellt ist, die den oberen Rand (106) des Pulpe-Behälters berührt und einer zweiten Dichtung (108), die den unteren Rand (110) der oberen Gehäuseabdeckung berührt; und
wobei die erste und zweite Dichtung als Spritzguss-Gummidichtung bereitgestellt sind.

## Revendications

1. Extracteur de jus (10), comprenant :
- un disque râpeur (22) pour râper un aliment en jus et en pulpe ;
- un tube d'alimentation (20) pour alimenter un aliment vers le disque à râper ;
- un tamis rotatif (26) pour séparer le jus et la pulpe ;
- un collecteur de jus (40) ;
- un conteneur de pulpe (42) renfermant un volume de collecte de pulpe (44) ;
- un couvercle de boîtier supérieur (50) ; et
- un boîtier de base (52) ;
le tamis a une forme tronconique s'étendant en diamètre le long de la direction d'alimentation d'une extrémité supérieure (30) à une extrémité inférieure (32), de sorte que l'extrémité supérieure a un diamètre inférieur à celui de l'extrémité inférieure ;
en cours d'utilisation, le jus est transporté à l'extérieur du tamis, et la pulpe est déchargée dans le conteneur de pulpe disposé au-dessous du tamis ;
le collecteur de jus est pourvu d'un réceptacle circonférentiel (48) connecté à un orifice de décharge (46), dans lequel le réceptacle circonférentiel est prévu de telle sorte que le jus transporté à l'extérieur du tamis est collecté ;
dans lequel le conteneur de pulpe comprend une paroi extérieure (54), laquelle paroi extérieure est prévue sous la forme d'une partie de boîtier à coque unique (56) supportant le collecteur de jus ;
la paroi extérieure renferme le volume de collecte de pulpe dans une direction radiale ;
**caractérisé en ce que**
la paroi extérieure est transparente circonférentiellement au moins de sorte qu'un état de remplissage de conteneur de pulpe (58) puisse être inspecté visuellement par un opérateur depuis l'extérieur dans toutes les directions d'observation.

2. Extracteur de jus selon la revendication 1, dans lequel la paroi extérieure est transparente circonférentiellement au moins le long d'environ 25 % de la périphérie.

3. Extracteur de jus selon la revendication 1 ou 2, dans lequel la paroi extérieure est transparente circonférentiellement sur toute la périphérie.

4. Extracteur de jus selon l'une des revendications précédentes, dans lequel le couvercle de boîtier supérieur est supporté par le collecteur de jus ;
dans lequel la paroi extérieure repose sur le boîtier de base et supporte le collecteur de jus ; et
dans lequel la paroi extérieure est prévue sous la forme d'un segment annulaire de boîtier transparent (60) disposé entre le boîtier de base et le collecteur de jus avec le boîtier supérieur sur le dessus.

5. Extracteur de jus selon l'une des revendications précédentes, dans lequel la paroi extérieure est constituée d'un matériau transparent (62).

6. Extracteur de jus selon l'une des revendications précédentes, dans lequel le conteneur de pulpe complet est constitué d'un matériau transparent.

7. Extracteur de jus selon l'une des revendications précédentes, dans lequel le volume de collecte de pulpe a une hauteur de remplissage (64) ; et dans lequel la paroi extérieure s'étend sur au moins la moitié de la hauteur de remplissage.

8. Extracteur de jus selon l'une des revendications précédentes, dans lequel le logement de base fournit un bord de centrage (66) contre lequel le récipient à pulpe repose dans une direction radiale ; et
dans lequel :
i) le bord de centrage est un rebord (68) du boîtier de base et le conteneur de pulpe est pourvu d'un évidement (70) fournissant une partie de paroi latérale d'évidement (72) et une partie de paroi supérieure d'évidement (74) ; dans lequel la partie de paroi latérale d'évidement vient au moins partiellement en butée contre le rebord dans une direction radiale et la partie de paroi supérieure d'évidement repose sur le rebord ; et/ou
ii) le bord de centrage est prévu à un rayon intérieur (84) du conteneur de pulpe.

9. Extracteur de jus selon l'une des revendications précédentes, dans lequel le conteneur de pulpe entoure une unité d'entraînement (28) pour faire tourner le disque râpeur et pour faire tourner le tamis.

10. Extracteur de jus selon l'une des revendications précédentes, dans lequel le conteneur de pulpe a une partie inférieure circonférentielle (86) avec une partie surélevée (88) assurant une interruption de la partie inférieure circonférentielle ;
dans lequel la partie surélevée s'étend à travers l'extension radiale de la partie inférieure circonférentielle.

11. Extracteur de jus selon la revendication 10, dans lequel le boîtier de base comprend un boîtier interne (76) et un boîtier externe (78), le boîtier interne renfermant une unité d'entraînement (28) pour faire tourner le disque râpeur et pour faire tourner le tamis à partir du dessus, et le boîtier externe renfermant l'unité d'entraînement à partir du dessous et servant de support à l'extracteur de jus.

12. Extracteur de jus selon la revendication 11, dans lequel le boîtier interne et le boîtier externe se chevauchent (80) en formant le bord de centrage.

13. Extracteur de jus selon l'une des revendications précédentes, dans lequel le collecteur de jus est pourvu d'un premier joint d'étanchéité (104) venant en contact avec un bord supérieur (106) du conteneur de pulpe et d'un second joint d'étanchéité (108) venant en contact avec un bord inférieur (110) du couvercle de boîtier supérieur ; et
dans lequel les premier et second joints d'étanchéité sont fournis sous la forme de joints d'étanchéité en caoutchouc injectés.
